**Europäisches Patentamt**

**European Patent Office**

**Office européen des brevets**

(11) Veröffentlichungsnummer: **0 303 128 B1**

(12) **EUROPÄISCHE PATENTSCHRIFT**

(45) Veröffentlichungstag der Patentschrift:
30.05.90

(21) Anmeldenummer: **88112398.8**

(22) Anmeldetag: **30.07.88**

(51) Int. Cl.⁵: **C03B 33/00, B26D 7/00**

(54) Transport- und/oder Bearbeitungstisch mit Auflage für plattenförmige Gegenstände.

(30) Priorität: **14.08.87 DE 3727166**

(43) Veröffentlichungstag der Anmeldung:
**15.02.89 Patentblatt 89/7**

(45) Bekanntmachung des Hinweises auf die Patenterteilung:
**30.05.90 Patentblatt 90/22**

(84) Benannte Vertragsstaaten:
**AT BE CH DE ES FR GB GR IT LI LU NL SE**

(56) Entgegenhaltungen:
**DE-C- 3 518 203**
**DE-U- 7 930 473**
**DE-U- 8 127 797**

(73) Patentinhaber: **FLACHGLAS AKTIENGESELLSCHAFT, Otto-Seeling-Promenade 10-14, D-8510 Fürth(DE)**

(72) Erfinder: **Knorsch, K. H., Lindermannstrasse 63, D-4200 Oberhausen 1(DE)**

(74) Vertreter: **Goddar, Heinz J., Dr. et al, FORRESTER & BOEHMERT Widenmayerstrasse 4/I, D-8000 München 22(DE)**

**Beschreibung**

Die Erfindung betrifft einen Transport- und/oder Bearbeitungstisch, insbesondere Glasbearbeitungstisch, mit einer im wesentlichen planen Tischplatte und mindestens einer mit der Tischoberfläche verbundenen, im Bedarfsfall auswechselbaren, vorzugsweise zum Durchführen von Transportelementen und/oder zur Luftkissenbildung durchlöcherten und/oder geschlitzten Auflage.

Bei Tischen dieser Art, bei denen beispielsweise die Tischplatte aus im wesentlichen inkompressiblem Mate rial, wie Metall oder dgl., und die Auflage aus im wesentlichen deformierbarem Material bestehen kann, ist es bisher üblich, die zum Zwecke des Durchführens von Transportelementen und/oder der Luftkissenbildung durchlöcherten bzw. geschlitzten Auflagen, die vorzugsweise aus Filz hergestellt sind, auf die plane Tischoberfläche dauerhaft aufzukleben. Das Entfernen der im Laufe der Benutzung in der Regel randseitig sich abnutzenden "alten" Auflagen von der Tischplatte gestaltet sich dabei schwierig, da nach dem gewaltsamen Abziehen der Auflage von der Tischoberfläche auf dieser in der Regel Kleber- bzw. Filzreste verbleiben, die zur Gewährleistung der erforderlichen Tischoberflächenplanheit vollständig abgeschliffen werden müssen, ehe eine neue Auflage auf die Tischoberfläche aufgeklebt werden kann.

Der Erfindung liegt die Aufgabe zugrunde, einen Tisch der gattungsgemäßen Art dahingehend weiterzubilden, daß in kürzerer Zeit und mit geringerem Arbeitsaufwand ein Auswechseln der Auflage(n) vorgenommen werden kann.

Erfindungsgemäß wird diese Aufgabe dadurch gelöst, daß die Auflage mit der Tischoberfläche der Tischplatte mittels einer Klettverschlußverbindung verbunden ist.

Dabei kann vorgesehen sein, daß auf die Tischoberfläche einerseits und auf die der Tischplatte zugewandte Rückfläche der andererseits (jeweils) einander gegenüberliegend mindestens ein Klettverschlußteil aufgeklebt ist.

Die Erfindung sieht fernerhin gegebenenfalls vor, daß mindestens ein Klettverschlußteil mit der Tischoberflä che bzw. der Rückfläche der Auflage mittels eines dem Klettelement abgewandten Selbstklebeelementes verbunden ist.

Dabei kann vorgesehen sein, daß die Auflage im wesentlichen ganzflächig mit einem Klettverschlußteil bedeckt ist.

Alternativ hierzu sieht die Erfindung gegebenenfalls vor, daß die Auflage bereichsweise mit einem Klettverschlußteil bedeckt ist.

Dabei kann schließlich vorgesehen sein, daß die Klettverschlußteile Streifenform haben.

Es kann jedoch auch vorgesehen sein, daß auf die Tischoberfläche ein ein Klettelement aufweisendes Klettverschlußteil aufgeklebt ist und die Auflage aus einem die Klettverschlußverbindung mit dem Klettverschlußteil bewirkenden Filz besteht.

Für diesen Fall wird vorgeschlagen, daß die der Tischplatte zugewandte Seite der Auflage aus einem Drahthaarfilz und die der Tischplatte abgewandte Seite der Auflage aus einem Weichfilz besteht.

Auch bei dieser Ausbildung kann vorgesehen sein, daß das Klettverschlußteil mit der Tischoberfläche mittels eines dem Klettelement abgewandten Selbstklebeelements verbunden ist.

Der Erfindung liegt die überraschende Erkenntnis zugrunde, daß es gelingt, die Nachteile der bisher bekannten Vorgehensweise, bei der die Auflagen mittels einer nur gewaltsam lösbaren Dauerklebeverbindung mit der Tischoberfläche verbunden werden, dadurch zu beheben, daß die Tischoberfläche einerseits und die der Tischoberfläche zugewandte Rückfläche der Auflage andererseits vorzugsweise mittels einer Selbstklebeschicht oder dergleichen mit je einem von zwei komplementären Klettverschlußteilen verklebt werden, wodurch es möglich ist, die Auflagen innerhalb kürzester Zeit ohne Produktionsunterbrechung auszuwechseln, indem zunächst nach dem Abziehen der alten Auflage auf ein Entfernen des auflagenrückseitig angebrachten Klettverschlußteiles verzichtet und die bereits vorab mit einem "neuen" Klettverschlußteil versehene neue Auflage auf das noch auf der Tischoberfläche verbliebene Klettverschlußteil aufgedrückt wird. Ein Entfernen des auflagenrückseitig angebrachten Klettverschlußelementes ist nicht erforderlich bei Verwendung einer Auflage, die aus einem die Klettverschlußverbindung mit dem Klettverschlußteil bewirkenden Filz besteht. Von Zeit zu Zeit kann es gegebenenfalls notwendig sein, auch das beim üblichen Auswechseln der Auflagen auf der Tischoberfläche verbleibende Klettverschlußteil auszutauschen, jedoch ist dies viel seltener der Fall, als das eigentliche Auswechseln der Auflagen, wobei durch geeignete Wahl der Selbstklebeschicht auch hier das Austauschen einfacher ist als im Falle der bisher vorgesehenen, mit der Tischoberfläche dauerhaft verklebten Auflagen.

Es ist zwar bereits in der Glasindustrie bekannt, als lösbare Halteeinrichtungen für Bauelemente unterschiedlicher Art Klettverschlußverbindungen einzusetzen (DE-PS 35 18 203; DE-GM 79 30 473; DE-GM 81 27 797), jedoch handelte es sich dabei in keinem Fall um eine Problem stellung, bei der bislang die Verwendung einer Dauerkleberschicht wegen des beim Lösen der Verbindung auftretenden "Stehenbleibens" von die erforderliche Planheit störenden Kleberresten Schwierigkeiten mit sich gebracht hätte.

Weitere Merkmale und Vorteile der Erfindung ergeben sich aus der nachstehenden Beschreibung, in der ein Ausführungsbeispiel anhand der schematischen Zeichnung im einzelnen erläutert ist. Dabei zeigt:

Fig. 1 ein erstes Ausführungsbeispiel eines Tisches nach der Erfindung im Schnitt senkrecht zur Tischoberfläche, und

Fig. 2 ein zweites Ausführungsbeispiel eines Tisches nach der Erfindung im Schnitt senkrecht zur Tischoberfläche.

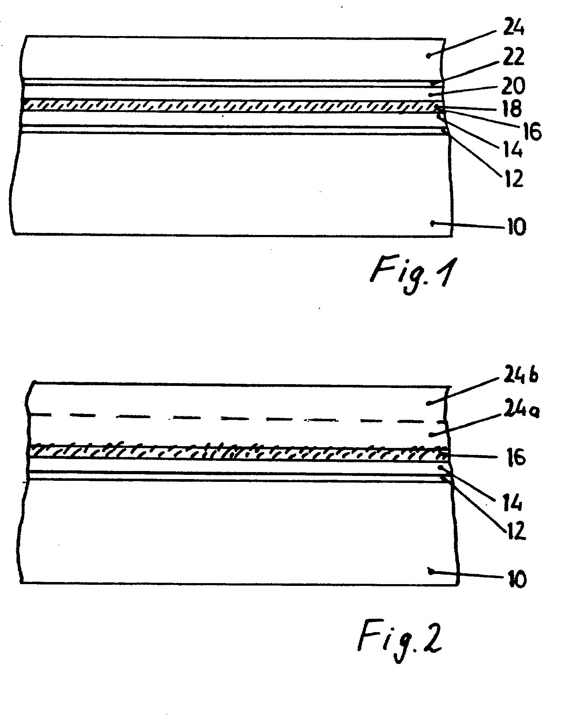

Wie Figur 1 erkennen läßt, ist dort auf die Tischoberfläche einer aus massivem Metall bestehenden Tischplatte 10 eines Glasschneidtisches über eine Selbstklebeschicht 12 ein erstes Klettverschlußteil 14 mit einem Klettelement 16 aufgeklebt. Über ein Klettelement 18 eines zweiten Klettverschlußteiles 20, welches mit einer rückseitigen Selbstklebeschicht 22 mit einer Auflage 24 aus Filz verbunden ist, ist die Filzauflage 24 lösbar mit der Tischoberfläche der Tischplatte 10 verbunden.

Zum Anbringen der Auflage 24 auf der Tischplatte 10 wird zunächst die Tischoberfläche der Tischplatte 10 mit dem ersten Klettverschlußteil 14 belegt, indem die rückwärtig angebrachte Selbstklebeschicht 12 an die Oberfläche der Tischplatte 10 angedrückt wird. Alsdann wird das vorab an die Auflage 24 durch Andrücken mittels der Selbstklebeschicht 22 angebrachte zweite Klettverschlußteil 20 auf das Klettverschlußteil 14 gedrückt, wobei sich die Klettelement 16, 18 miteinander verhaken und auf diese Weise eine leicht lösbare Formschlußverbindung zwischen der Tischplatte 10 und der Auflage 24 schaffen. Muß die Auflage 24 ausgewechselt werden, so genügt ein einfaches Abziehen derselben, durch welches die Klettelemente 16, 18 außer Eingriff kommen, wobei das erste Klettverschlußteil 14 an der Tischplatte 10 verbleibt. Alsdann dann eine neue Auflage 24 mit einem entsprechenden zweiten Klettverschlußteil 20 erneut auf das auf der Tischplatte 10 verbliebene Klettverschlußteil 14 aufgedrückt werden. Hierdurch ist es möglich, kostengünstig und in geringstmöglicher Zeit ohne Produktionsunterbrechung Auflagen 24 auszuwechseln.

Auch bei dem in Figur 2 gezeigten Ausführungsbeispiel ist auf die Tischplatte 10 eines Glasschneidtisches oder dergleichen über eine Selbstklebeschicht 12 ein Klettverschlußteil 14 mit einem Klettelement 16 aufgeklebt. Anders als bei dem ersten Ausführungsbeispiel ist auf die Auflage 24 jedoch kein weiteres Klettenverschlußteil 20 aufgeklebt, die Auflage 24 besteht vielmehr auf der der Tischplatte zugewandten Seite aus einem Drahthaarfilz 24a, der sich unmittelbar mit dem Klettelement 16 des Klettverschlußteils 14 verbindet. Diese Ausbildung erleichtert das Auswechseln der Auflage weiter, da das Entfernen des auf die Rückseite der Auflage aufgebrachten Klettverschlußteils entfällt. Die Oberseite der Auflage wird durch einem Weichfilz 24b gebildet.

Die vorgeschlagene Ausbildung eines Transport- und/oder Bearbeitungstisches hat neben dem Vorteil der einfachen Auswechselbarkeit der Auflage den weiteren Vorteil, daß horizontale Kräfte, die durch die zu bearbeitenden plattenförmigen Gegenstände aufgebracht werden, besser aufgefangen werden können. Dies bewirkt eine Verschleißminderung der Auflagenoberfläche und damit eine Verlängerung der Standzeit dieser Auflagen.

**Patentansprüche**

1. Transport- und/oder Bearbeitungstisch, insbesondere Glasbearbeitungstisch, mit einer im wesentlichen planen Tischplatte und mindestens einer mit der Tischoberfläche verbundenen, im Bedarfsfall auswechselbaren, vorzugsweise zum Durchführen von Transportelementen und/oder zur Luftkissenbildung durchlöcherten und/oder geschlitzten Auflage, dadurch gekennzeichnet, daß die Auflage (24) mit der Tischoberfläche der Tischplatte (10) mittels einer Klettverschlußverbindung (14, 20) verbunden ist.

2. Tisch nach Anspruch 1, dadurch gekennzeichnet, daß auf die Tischoberfläche einerseits und auf die der Tischplatte (10) zugewandte Rückfläche der Auflage (24) andererseits (jeweils) einander gegenüberliegend mindestens ein ein Klettelement (16, 18) aufweisendes Klettverschlußteil (14, 20) aufgeklebt ist.

3. Tisch nach Anspruch 2, dadurch gekennzeichnet, daß mindestens ein Klettverschlußteil (14, 20) mit der Tischoberfläche bzw. der Rückfläche der Auflage (24) mittels eines dem Klettelement (16, 18) abgewandten Selbstklebeelementes (12, 22) verbunden ist.

4. Tisch nach Anspruch 2 oder 3, dadurch gekennzeichnet, daß die Auflage (24) im wesentlichen ganzflächig mit einem Klettverschlußteil (20) bedeckt ist.

5. Tisch nach Anspruch 2 oder 3, dadurch gekennzeichnet, daß die Auflage (24) bereichsweise mit einem Klettverschlußteil (20) bedeckt ist.

6. Tisch nach Anspruch 5, dadurch gekennzeichnet, daß die Klettverschlußteile (14, 20) Streifenform haben.

7. Tisch nach Anspruch 1, dadurch gekennzeichnet, daß auf die Tischoberfläche ein ein Klettelement (16) aufweisendes Klettverschlußteil (14) aufgeklebt ist und die Auflage (24) aus einem die Klettverschlußberbindung mit dem Klettverschlußteil (14) bewirkenden Filz be steht.

8. Tisch nach Anspruch 7, dadurch gekennzeichnet, daß die der Tischplatte (10) zugewandte Seite der Auflage (24) aus einem Drahthaarfilz (24a) und die der Tischplatte (10) abgewandte Seite der Auflage (24) aus einem Weichfilz (24b) besteht.

9. Tisch nach Anspruch 7 oder nach Anspruch 8, dadurch gekennzeichnet, daß das Klettverschlußteil (14) mit der Tischoberfläche mittels eines dem Klettelement (16) abgewandten Selbstklebeelements (12) verbunden ist.

**Revendications**

1. Table de transport et/ou de traitement, notamment table de traitement du verre, avec un plateau de table sensiblement plan et au moins un revêtement d'appui relié à la surface supérieure de la table, pouvant être échangé en cas de nécessité, et perforé et/ou pourvu de fentes pour de préférence faire passer des éléments de transport et/ou pour la formation d'un coussin d'air, caractérisée en ce que le revêtement d'appui (24) est relié à la surface supérieure de table du plateau de table (10), au moyen d'une liaison par auto-agrippement (14, 20).

2. Table selon la revendication 1, caractérisée en ce que au moins une partie de la liaison par auto-agrippement (14, 20) présentant un élément auto-agrippant (16, 18) est collée, d'une part, sur la surface supérieure de la table, et d'autre part, sur la surface formée sur l'envers du revêtement d'appui (24) et adjacente au plateau de table (10), les deux parties de la liaison par auto-agrippement étant ainsi mutuellement opposées.

3. Table selon la revendication 2, caractérisée en ce que au moins une partie de la liaison par autoagrippement (14, 20) est reliée à la surface supérieure de la table ou la surface formée sur l'envers du revêtement d'appui (24), au moyen d'un élément auto-collant (12, 22) opposé à l'élément auto-agrippant (16, 18).

4. Table selon la revendication 2 ou 3, caractérisée en ce que le revêtement d'appui (24) est recouvert sensiblement sur la totalité de sa surface, par une partie (20) de la liaison par auto-agrippement.

5. Table selon la revendication 2 ou 3, caractérisée en ce que le revêtement d'appui (24) n'est recouvert que partiellement par une partie (20) de la liaison par auto-agrippement.

6. Table selon la revendication 5, caractérisée en ce que les parties de liaison par auto-agrippement (14, 20) se présentent sous la forme de bandes.

7. Table selon la revendication 1, caractérisée en ce que sur la surface supérieure de la table est collée une partie (14) de liaison par auto-agrippement pourvue d'un élément auto-agrippant (16), et que le revêtement d'appui (24) est constitué d'un feutre établissant la liaison par auto-agrippement avec la partie (14) de liaison par auto-agrippement.

8. Table selon la revendication 7, caractérisée en ce que le côté du revêtement d'appui (24), adjacent au plateau de table (10), est constitué d'un feutre de filaments métalliques (24a), tandis que le côté du revêtement d'appui, opposé au précédent, est constitué d'un feutre doux (24b).

9. Table selon la revendication 7 ou selon la revendication 8, caractérisée en ce que la partie de liaison par auto-agrippement (14) est reliée à la surface supérieure de table au moyen d'un élément auto-collant (12) sur la face opposée à l'élément auto-agrippant (16).

**Claims**

1. A transport and/or work bench, more particularly a glass work bench, having a substantially flat worktop and at least one support connected to the bench surface, such support being being interchangeable as required and being perforate and/or slotted preferably for the passage of transport elements and/or to form an air cushion, characterised in that the support (24) is connected to the surface of the bench worktop (10) by means of a hook and pile fastener connection (14, 20).

2. A bench according to claim 1, characterised in that at least one hook and pile fastener part (14, 20) comprising a hook and pile element (16, 18) is stuck to the bench surface, on the one hand, and on to the back of the support (20) facing the worktop (10), on the other hand, such parts (14, 20) (respectively) being situated one opposite the other.

3. A bench according to claim 2, characterised in that at least one hook and pile fastener part (14, 20) is connected to the worktop surface and to the back of the support (24) respectively by means of a self-adhesive element (12, 22) remote from the hook and pile element (16, 18).

4. A bench according to claim 2 or 3, characterised in that substantially the entire surface of the support (24) is covered with a hook and pile fastener part (20).

5. A bench according to claim 2 or 3, characterised in that zones of the support (24) are covered with a hook and pile fastener part (20).

6. A bench according to claim 5, characterised in that the hook and pile fastener parts (14, 20) are in strip form.

7. A bench according to claim 1, characterised in that a hook and pile fastener part (14) comprising a hook and pile element (16) is stuck to the bench surface and the support (24) consists of a felt which produces the hook and pile fastener connecton with the hook and pile fastener part (14).

8. A bench according to claim 7, characterised in that that side of the support (24) which faces the worktop (10) consists of a wirehair felt (24a) and that side of the support (24) which is remote from the worktop (10) consists of a soft felt (24b).

9. A bench according to claim 7 or claim 8, characterised in that the hook and pile fastener part (14) is connected to the worktop surface by means of a self-adhesive element (12) remote from the hook and pile element (16).

*Fig.1*

*Fig.2*